# EUROPEAN PATENT SPECIFICATION

(11) **EP 3 035 725 B1**
(45) Date of publication and mention of the grant of the patent: **19.12.2018**
(21) Application number: 14836812.9
(22) Date of filing: 16.04.2014
(51) Int. Cl.: H04W 12/06, H04W 84/12, H04W 12/04, G06F 17/30, G06K 7/10, G06K 19/06, G07F 7/10

(54) **AUTHENTICATION METHOD AND AUTHENTICATION DEVICE FOR WIRELESS ROUTER**
AUTHENTIFIZIERUNGSVERFAHREN UND AUTHENTIFIZIERUNGSVORRICHTUNG FÜR DRAHTLOSROUTER
PROCÉDÉ D'AUTHENTIFICATION ET DISPOSITIF D'AUTHENTIFICATION POUR UN ROUTEUR SANS FIL

(30) Priority: 15.08.2013 CN 201310355421
(43) Date of publication of application: 22.06.2016
(73) Proprietor: Huizhou TCL Mobile Communication Co., Ltd., Hui Zhou Guangdong 516006 (CN)
(72) Inventor: XUE, Min, Huizhou Guangdong 516006 (CN)
(74) Representative: Brachmann, Roland W.
(86) International application number: PCT/CN2014/075525
(87) International publication number: WO 2015/021787

(56) References cited:
- WO-A1-2013/032483
- CN-A- 1 547 405
- CN-A- 102 595 643
- CN-A- 103 179 640
- CN-A- 103 415 012
- US-A1- 2008 037 786
- US-A1- 2011 247 056
- US-B2- 8 421 595

## Description

The present invention relates to the wireless network authentication field and in particular to an authentication method and an authentication device for a wireless router. Currently when a cell phone is used to access a wireless router, existing authentication methods, such as WPA (Wi-Fi Protected Access), requires the provision of information like SSID (Service Set Identifier), encryption modes and secret keys. Even for the relatively advanced WPS (Wi-Fi Protected Setup), authentication can only be completed by inputting a PIN (Personal Identification Number) code or button operations on the accessing terminal. As a result, a user has to look for SSID and perform operations like password input, which is time consuming and inconvenient; when a wireless router's configuration is changed, moreover, the user must re-configure the cell phone's access information, which results in great inconvenience for the user. CN 102 595 643 discloses a method for an automatic connection or pairing of wireless devices based on a barcode and considering BSSID, MAC addresses and PIN codes. US8421595 discloses an identity authentication using biometrics and dynamic PIN codes.

Therefore, the prior art still needs to be improved and developed.

The technical problem that the present invention intends to solve is to, in light of the above drawback of the prior art, provide an authentication method and an authentication device for a wireless router. It is intended to solve the problem that the complex wireless authentication operation according to the prior art results in inconvenience for users.

This problem is solved according to the features of the independent claims. Further embodiments result from the depending claims.

The present invention employs the following technical solution:

An authentication method for a wireless router is provided, wherein it comprises the following steps:
A. Generating a corresponding 2-dimensional barcode with the wireless router's BSSID and PIN codes in advance;
B. Scanning the 2-dimensional barcode and resolving to the corresponding BSSID and PIN codes;
C. Correlating the corresponding wireless router according to the BSSID, activating the WPS process of the wireless router, and accessing the network provided by the wireless router via the PIN code.

According to an embodiment, the authentication method between Step A and Step B further comprises:
B0. Detecting if the WIFI function is turned on, and entering Step B when the WIFI function is turned on.

According to an embodiment, the BSSID is the MAC address of the wireless router.

According to an embodiment, the MAC address contains a PIN code.

According to an embodiment, Step B further comprises: storing the BSSID and PIN codes.

Also, an authentication method for a wireless router is provided comprising the following steps:
A. Generating a corresponding 2-dimensional barcode with the wireless router's BSSID and PIN codes in advance; the BSSID is the MAC address of the wireless router and the MAC address contains a PIN code;
B. Scanning the 2-dimensional barcode and resolving to the corresponding BSSID and PIN codes;
C. Correlating the corresponding wireless router according to the BSSID, activating the WPS process of the wireless router, and accessing the network provided by the wireless router via the PIN code.

According to an embodiment, the authentication method between Step A and Step B further comprises:
B0. Detecting if the WIFI function is turned on, and entering Step B when the WIFI function is turned on.

According to an embodiment, Step A further comprises: attaching the 2-dimensional barcode generated with the wireless router's BSSID and PIN codes to the back of a wireless device when leaving the factory.

According to an embodiment, Step B further comprises: storing the BSSID and PIN codes.

According to an embodiment, Step A further comprises: setting the PIN code to be an 8-digit decimal number corresponding to the last 4-digit hexadecimal number of the MAC address.

An authentication method for a wireless router is provided, wherein it comprises the following steps:
A. Generating a corresponding 2-dimensional barcode with the wireless router's BSSID and PIN codes in advance; the BSSID is the MAC address of the wireless router and the MAC address contains a PIN code;
   B0. Detecting if the WIFI function is turned on, and entering Step B when the WIFI function is turned on.
B. Scanning the 2-dimensional barcode, resolving to the corresponding BSSID and PIN codes, and storing the BSSID and PIN codes;
C. Correlating the corresponding wireless router according to the BSSID, activating the WPS process of the wireless router, and accessing the network provided by the wireless router via the PIN code.

According to an embodiment, Step A further comprises: attaching the 2-dimensional barcode generated with the wireless router's BSSID and PIN codes to the back of a wireless device when leaving the factory.

According to an embodiment, Step A further comprises: setting the PIN code to be an 8-digit decimal number corresponding to the last 4-digit hexadecimal number of the MAC address.

An authentication device for a wireless router is suggested, wherein it comprises:
- A 2-dimensional barcode generating module for generating a corresponding 2-dimensional barcode with the wireless router's BSSID and PIN codes;
- A 2-dimensional barcode scanning module for scanning the 2-dimensional barcode;
- A 2-dimensional barcode resolving module for resolving the 2-dimensional barcode to the corresponding BSSID and PIN codes;
- A WPS wireless connecting module for correlating the corresponding wireless router according to the BSSID, activating the WPS process of the wireless router, and accessing the network provided by the wireless router via the PIN code.

According to an embodiment, the authentication device further comprises:
- A WIFI function detection module for detecting if the WIFI function is turned on.

According to an embodiment, the authentication device further comprises: an encoding unit for encoding the PIN code into the MAC address.

According to an embodiment, the authentication device further comprises: a storage unit for storing the resolved BSSID and PIN codes.

The authentication method and authentication device for a wireless router according to the present invention effectively solves the problem that the complex operation for a mobile terminal to access a wireless router according to the prior art results in great inconvenience for users. The authentication method generates a corresponding 2-dimensional barcode with the wireless router's BSSID and PIN codes in advance; scans the 2-dimensional barcode and resolves to corresponding BSSID and PIN codes; correlates the corresponding wireless router according to the BSSID, activates the WPS process of the wireless router, and accesses the network provided by the wireless router via the PIN code, With the generation of a corresponding 2-dimensional barcode with the wireless router's BSSID and PIN codes, a user can access the wireless router and go online just by using a mobile terminal to scan the 2-dimensional barcode, which greatly reduces the user's operations and results in great convenience for users. Its implementation method is simple and can be implemented through software, leading to a relatively low cost.

The aforementioned characteristics, features and advantages of the invention as well as the way they are achieved will be further illustrated in connection with the following examples and considerations as discussed in view of the figures.
- Fig.1: is a flow chart of a preferred embodiment of the authentication method for a wireless router according to the present invention.
- Fig.2: is a structural block diagram of a preferred embodiment of the authentication device for a wireless router according to the present invention.

The present invention provides an authentication method and authentication device for a wireless router. To make the object, technical solution and advantage of the present invention clearer and more specific, the present invention will be further described in detail below with reference to the accompanying drawings and embodiments. It should be understood that the specific embodiments herein are only used to describe the present invention, rather than to limit the present invention.

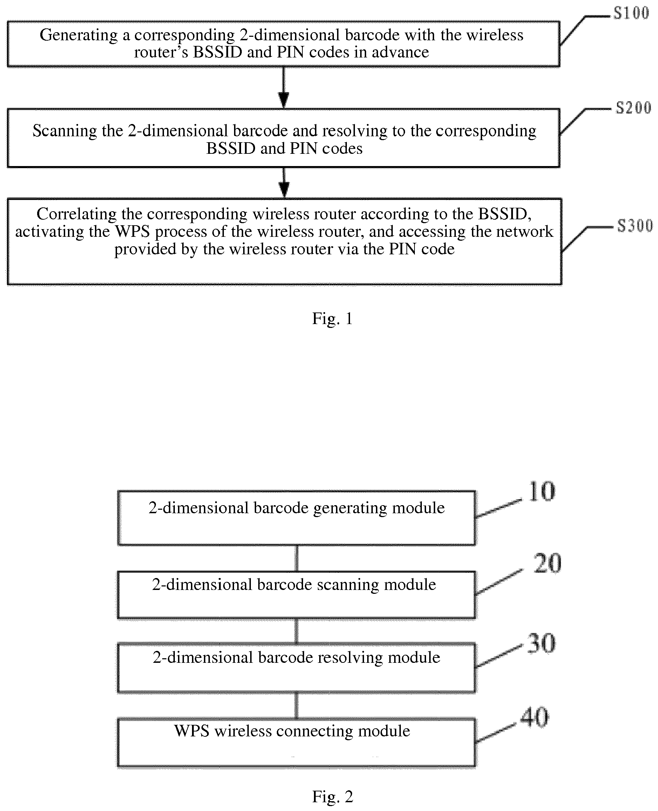

Please refer to Fig.1, Fig.1 is a flow chart of a preferred embodiment of the authentication method for a wireless router according to the present invention, and as shown in Fig.1, the authentication method comprises the following steps:
Step S100. Generating a corresponding 2-dimensional barcode with the wireless router's BSSID and PIN codes in advance;
Step S200. Scanning the 2-dimensional barcode and resolving to the corresponding BSSID and PIN codes;
Step S300. Correlating the corresponding wireless router according to the BSSID, activating the WPS process of the wireless router, and accessing the network provided by the wireless router via the PIN code.

The above steps will be described below in detail with reference to specific embodiments.

In Step S100, generate a corresponding 2-dimensional barcode with the wireless router's BSSID and PIN codes in advance. Specifically, both SSID (Service Set Identifier) and the access authentication information of an access terminal will change in use due to changes by a user. To make the access process transparent to the user, i.e. the cell phone can access the wireless router quickly no matter how the user changes SSID and the authentication information (password, etc.), the present invention mixes and encodes the wireless router's BSSID (Basic Service Set ID, i.e. the MAC address of the site) and WPS (Wi-Fi Protected Setup) PIN codes to a 2-dimensional barcode, and corresponds the 2-dimensional barcode to the wireless router, for example, just by attaching the unique 2-dimensional barcode to the back of a wireless device when leaving the factory. BSSID, a special application of Ad-hoc LAN, is also referred to as Basic Service Set (BSS). When a group of computers are set to the same BSS, they can form a group by themselves. Each BSS will be assigned a BSSID, which is a 48 digit-long binary identifier for identifying different BSS.

In Step S200, the mobile terminal scans the 2-dimensional barcode and resolves to the corresponding BSSID and PIN codes. Specifically, the cell phone scans the 2-dimensional barcode corresponding to the wireless router by turning on the camera, and then correspondingly identifies the 2-dimensional barcode as the BSSID and PIN codes. Preferably, it further stores the BSSID and PIN codes for convenient reading in the future. There is no need to scan again, and the user just needs to be close to the corresponding wireless router for being authenticated to go online with the recorded BSSID and PIN codes.

In Step S300, the mobile terminal correlates the corresponding wireless router according to the identified BSSID, activates the WPS process of the wireless router, i.e. the one-key encryption function, performs one-key encryption via the PIN code, and subsequently accesses the network provided by the wireless router to go online. Specifically, the WIFI module of the mobile terminal scans networks close by, the mobile terminal matches the identified BSSID with multiple networks that have been scanned, if the matching is successful, then said network is determined to be a wireless network corresponding to the wireless router. When the wireless network is determined, the mobile terminal subsequently performs the WPS process, i.e. the one-key encryption process, according to the identified BSSID. The one-key encryption process is the prior art, which will be described briefly herein. The pin code of the router is an identification code of QSS (Quick Secure Setup) quick connection function. For example, if a user sets up a very complicated wireless password, it is very inconvenient to type in the password every time when a device accesses the wireless network. At this time, it is permitted to access the network by inputting an 8-digit pin code for identification by the router, which is equivalent to the input of the wireless password. In such a way, the mobile terminal knows the BSSID and PIN codes of the wireless router, and according to the WPS protocol, any router with the WPS function (i.e. the one-key encryption function) can be safely accessed. Therefore, a permanent access authentication identifier is realized for the wireless device, and any cell phone or other smart terminals installed with a WBPS client can conveniently and safely access the wireless router.

Preferably, it further comprises between Step S100 and Step S200: S190, detecting if the WIFI function is turned on, and entering Step S200 when the WIFI function is turned on. Specifically, if it is detected that the WIFI function is not turned on, it prompts the user to turn on the WIFI function, or the WIFI function is automatically turned on. If the WIFI function has been turned on, enter Step S200 to begin scanning the 2-dimensional barcode.

Preferably, the BSSID is the MAC (Media Access Control) address of the wireless router.

Preferably, the MAC address contains a PIN code. Specifically, the MAC address is a 12-digit hexadecimal number. The PIN code is an 8-digit decimal number. To make encoding and decoding convenient, the present invention may choose that the MAC address implicitly contains a PIN code, i.e. by setting the PIN code to be an 8-digit decimal number corresponding to the last 4-digit hexadecimal number of the MAC address. For example, assume a device's MAC address is 00:19:2A:68:E3:21, then its last 4-digit hexadecimal number E3:21 is taken and expanded to an 8-digit decimal number of 14 03 02 01. In such a way, the device's BSSID and PIN codes can be uniquely determined through the device's MAC address, which are 00:19:2A:68:E3:21 and 14030201, respectively.

The authentication method for a wireless router according to the present invention is a WPS-based mobile terminal Wi-Fi authentication technique, i.e. Alcatel WBPS (Alcatel Wi-Fi Barcode Protected Setup). WBPS is an expansion based on the WPS method, which uses the access point information encoded in the 2-dimensional barcode to quickly connect a device using the method of WPS PIN-label. Any smart terminal that supports WBPS can be quickly connected into an AP device just by scanning the WBPS code without any additional operations. In practical applications, the 2-dimensional barcode may also be replaced by a barcode, which is a simple substitution and also encompassed by the present invention.

Use of the authentication method for a wireless router according to the present invention will be described below with cell phone as an example. It may be used as a WBPS client and installed in the cell phone. Both the cell phone and the wireless router support the WPS protocol. First, generate a corresponding 2-dimensional barcode with the wireless router's BSSID and PIN codes in advance and attach to the wireless router. In practical use, multiple corresponding 2-dimensional barcodes may be configured and attached to locations that are convenient for the user to scan, such as on the wall or a desk. Subsequently, the user activates the WBPS client on the cell phone. When the WBPS client is activated, detect if the WIFI function of the mobile terminal is turned on, if not, the WIFI function is automatically turned on. Then, the user scans the 2-dimensional barcode and resolves to the corresponding BSSID and PIN codes through the WBPS client. At the same time, the WIFI function of the cell phone searches networks close by, the WBPS client sends a command to the Wi-Fi module to correlate AP with a designated BSSID; at the same time, activate the WPS process of the wireless router, and access the network provided by the wireless router via the PIN code. Preferably, the generated 2-dimensional barcode may further be encrypted, and the cell phone client will perform decryption so as to improve security.

Based on the above authentication method for a wireless router, the present invention further provides an authentication device for a wireless router. Please refer to Fig.2, Fig.2 is a structural block diagram of a preferred embodiment of the authentication device for a wireless router according to the present invention, and as shown in Fig.2, the authentication device comprises:
A 2-dimensional barcode generating module 10 for generating a corresponding 2-dimensional barcode with the wireless router's BSSID and PIN codes; see Step S100 for details.

A 2-dimensional barcode scanning module 20 for scanning the 2-dimensional barcode; see Step S200 for details.

A 2-dimensional barcode resolving module 30 for resolving the 2-dimensional barcode to the corresponding BSSID and PIN codes; see Step S200 for details.

A WPS wireless connecting module 40 for correlating the corresponding wireless router according to the BSSID, activating the WPS process of the wireless router, and accessing the network provided by the wireless router via the PIN code; see Step S300 for details.

Preferably, the authentication device for a wireless router further comprises: a WIFI function detection module for detecting if the WIFI function is turned on.

Preferably, the authentication device for a wireless router further comprises: an encoding unit for encoding the PIN code into the MAC address. Specifically, the MAC address implicitly contains a PIN code, i.e. by setting the PIN code to be an 8-digit decimal number corresponding to the last 4-digit hexadecimal number of the MAC address.

Preferably, the authentication device for a wireless router further comprises: a storage unit for storing the resolved BSSID and PIN codes.

Specifically, the 2-dimensional barcode generating module 10 generates a corresponding 2-dimensional barcode with the wireless router's BSSID and PIN codes, and then may place the 2-dimensional barcode at a convenient location for subsequent scanning. The WIFI function detection module detects if the WIFI function of the mobile terminal is turned on, when the WIFI function of the mobile terminal is turned on, the 2-dimensional barcode scanning module 20 scans the corresponding 2-dimensional barcode, and sends it to the 2-dimensional barcode resolving module 30, and the 2-dimensional barcode resolving module 30 resolves it to the corresponding BSSID and PIN codes. The WPS wireless connecting module 40 correlates the corresponding wireless router according to the BSSID, activates the WPS process of the wireless router, i.e. the one-key encryption function, and the mobile terminal may access the network of the wireless router via the PIN code.

In summary, the present invention provides an authentication method and an authentication device for a wireless router. The authentication method generates a corresponding 2-dimensional barcode with the wireless router's BSSID and PIN codes in advance; scans the 2-dimensional barcode and resolves to corresponding BSSID and PIN codes; correlates the corresponding wireless router according to the BSSID, activates the WPS process of the wireless router, and accesses the network provided by the wireless router via the PIN code. With the generation of a corresponding 2-dimensional barcode with the wireless router's BSSID and PIN codes, a user can access the wireless router and go online just by using a mobile terminal to scan the 2-dimensional barcode. As a result, the mobile terminal can be conveniently and quickly connected to the wireless router, which greatly reduces the user's operations and results in great convenience for users. Its implementation method is simple and can be implemented through software, leading to a relatively low cost.

It should be understood that applications of the present invention are not limited to the above examples. To those skilled in the art, improvements or modifications may be made according to the above description, and all of these improvements or modifications shall be encompassed by the appended claims of the present invention.

## Claims

1. An authentication method for a wireless router comprising the following steps:
B0. Detecting, by a mobile terminal, if its WIFI function is turned on, and entering Step B when the WIFI function is turned on; and, if it is detected that the WiFi function is not turned on, prompting the user to turn on the WiFi function on the mobile terminal, or automatically turning on the WiFi function of the mobile terminal;
B. Scanning the 2-dimensional barcode with the wireless router's BSSID and PIN codes attached to the wireless router in advance, wherein the BSSID is the MAC address of the wireless router and the MAC address contains a PIN code (S100), resolving to the corresponding BSSID and PIN codes (S200), and storing the BSSID and PIN codes in the mobile terminal;
C. Correlating, by the mobile terminal, the corresponding wireless router according to the BSSID, activating, by the mobile terminal, a WPS process of the wireless router, and accessing, by the mobile terminal, the network provided by the wireless router via the PIN code (S300) without a user's operation.

2. The authentication method for a wireless router according to any of the preceding claims, wherein the 2-dimensional barcode generated with the wireless router's BSSID and PIN codes has been attached to the back of a wireless device when leaving a factory.

3. The authentication method for a wireless router according to any of the preceding claims, wherein the PIN code is set to be an 8-digit decimal number corresponding to the last 4-digit hexadecimal number of the MAC address.

4. An authentication device for a wireless router comprising:
- An encoding unit for encoding a PIN code into a MAC address of the wireless router;
- A 2-dimensional barcode generating module (10) for generating a corresponding 2-dimensional barcode with the wireless router's BSSID and PIN codes, wherein the BSSID is the MAC address of the wireless router and the MAC address contains a PIN code;
- A 2-dimensional barcode scanning module (20) for scanning the 2-dimensional barcode;
- A 2-dimensional barcode resolving module (30) for resolving the 2-dimensional barcode to the corresponding BSSID and PIN codes;
- A WPS wireless connecting module (40) for correlating the corresponding wireless router according to the BSSID, activating the WPS process of the wireless router, and accessing the network provided by the wireless router via the PIN code without a user's operation.

5. The authentication device for a wireless router according to claim 4, further comprising:
- A WIFI function detection module for detecting if the WIFI function is turned on.

6. The authentication device for a wireless router according to any of claims 4 to 5, wherein it further comprises: a storage unit for storing the resolved BSSID and PIN codes.

## Patentansprüche

1. Authentifizierungsverfahren für einen Wireless-Router, das die folgenden Schritte umfasst:
B0. Erfassen, durch ein mobiles Endgerät, ob seine WiFi-Funktion eingeschaltet ist, und Eintreten in Schritt B, wenn die WiFi-Funktion eingeschaltet ist; und, falls erfasst wird, dass die WiFi-Funktion nicht eingeschaltet ist, Auffordern des Benutzers, die WiFi-Funktion am mobilen Endgerät einzuschalten, oder die WiFi-Funktion des mobilen Endgeräts automatisch einschalten;
B. Vorheriges Scannen des 2-dimensionalen Barcodes von am Wireless-Router angebrachten BSSID- und PIN-Codes des Wireless-Routers, wobei die BSSID die MAC-Adresse des Wireless-Routers ist und die MAC-Adresse einen PIN-Code (S100) enthält, der die entsprechenden BSSID- und PIN-Codes (S200) auflöst, und Speichern der BSSID- und PIN-Codes in dem mobilen Endgerät;
C. Korrelieren, durch das mobile Endgerät, des entsprechenden Wireless-Routers gemäß der BSSID, Aktivieren, durch das mobile Endgerät, eines WPS-Prozesses des Wireless-Routers, und Zugreifen, durch das mobile Endgerät, auf das durch den Wireless-Router bereitgestellte Netzwerk über den PIN-Code (S300) ohne Eingriff durch einen Benutzer.

2. Authentifizierungsverfahren für einen Wireless-Router gemäß einem der vorhergehenden Ansprüche, wobei der mit den BSSID- und PIN-Codes des Wireless-Routers erzeugte 2-dimensionale Barcode bei Verlassen einer Fabrik an der Rückseite einer drahtlosen Vorrichtung angebracht worden ist.

3. Authentifizierungsverfahren für einen Wireless-Router gemäß einem der vorhergehenden Ansprüche, wobei der PIN-Code als eine 8-stellige Dezimalzahl eingestellt ist, die der letzten 4-stelligen Hexadezimalzahl der MAC-Adresse entspricht.

4. Authentifizierungsvorrichtung für einen Wireless-Router, aufweisend:
- eine Codiereinheit zum Codieren eines PIN-Codes in eine MAC-Adresse des Wireless-Routers;
- ein Modul (10) zum Erzeugen von 2-dimensionalen Barcodes für die Erzeugung eines entsprechenden 2-dimensionalen Barcodes mit den BSSID- und PIN-Codes des Wireless-Routers, wobei die BSSID die MAC-Adresse des Wireless-Routers ist und die MAC-Adresse einen PIN-Code enthält;
- ein Modul (20) zum Scannen von 2-dimensionalen Barcodes für das Scannen des 2-dimensionalen Barcodes;
- ein Modul (30) zum Auflösen von 2-dimensionalen Barcodes für das Auflösen des 2-dimensionalen Barcodes in die entsprechenden BSSID- und PIN-Codes;
- ein drahtloses WPS-Verbindungsmodul (40) zum Korrelieren des entsprechenden Wireless-Routers gemäß der BSSID, Aktivieren des WPS-Prozesses des Wireless-Routers, und Zugreifen auf das von dem Wireless-Router bereitgestellte Netzwerk über den PIN-Code ohne Eingriff durch einen Benutzer.

5. Authentifizierungsvorrichtung für einen Wireless-Router gemäß Anspruch 4, ferner aufweisend:
- ein WiFi-Funktions-Erfassungsmodul, um zu erfassen, ob die WiFi-Funktion eingeschaltet ist.

6. Authentifizierungsvorrichtung für einen Wireless-Router gemäß einem der Ansprüche 4 bis 5, ferner aufweisend: eine Speichereinheit zum Speichern der aufgelösten BSSID- und PIN-Codes.

## Revendications

1. Procédé d'authentification pour un routeur sans fil, comprenant les étapes suivantes consistant à :
B0. détecter, par un terminal mobile, si sa fonction WiFi est activée, et passer à l'étape B lorsque la fonction WiFi est activée ; et s'il est détecté que la fonction WiFi n'est pas activée, inviter l'utilisateur à activer la fonction WiFi sur le terminal mobile ou activer automatiquement la fonction WiFi du terminal mobile ;
B. lire le code barre bidimensionnel avec les codes BSSID et PIN du routeur sans fil préalablement fixés au routeur sans fil, dans lequel le BSSID est l'adresse MAC du routeur sans fil et l'adresse MAC contient un code PIN (S100), résoudre les codes BSSID et PIN correspondants (S200), et stocker les codes BSSID et PIN dans le terminal mobile ;
C. corréler, par le terminal mobile, le routeur sans fil correspondant selon le BSSID, activer, par le terminal mobile, un processus WPS du routeur sans fil, et accéder, par le terminal mobile, au réseau fourni par le routeur sans fil par l'intermédiaire du code PIN (S300) sans l'intervention d'un utilisateur.

2. Procédé d'authentification pour un routeur sans fil selon l'une quelconque des revendications précédentes, dans lequel le code barre bidimensionnel généré avec les codes BSSID et PIN du routeur sans fil a été fixé à l'arrière d'un dispositif sans fil à la sortie d'une usine.

3. Procédé d'authentification pour un routeur sans fil selon l'une quelconque des revendications précédentes, dans lequel le code PIN est réglé pour être un nombre décimal à 8 chiffres correspondant au dernier nombre hexadécimal à 4 chiffres de l'adresse MAC.

4. Dispositif d'authentification pour un routeur sans fil, comprenant :
- une unité de codage pour coder un code PIN dans une adresse MAC du routeur sans fil ;
- un module (10) de génération de code barre bidimensionnel pour générer un code barre bidimensionnel correspondant avec les codes BSSID et PIN du routeur sans fil, dans lequel le BSSID est l'adresse MAC du routeur sans fil et l'adresse MAC contient un code PIN ;
- un module (20) de lecture de code barre bidimensionnel pour lire le code barre bidimensionnel ;
- un module (30) de résolution de code barre bidimensionnel pour résoudre le code barre bidimensionnel en codes BSSID et PIN correspondants ;
- un module (40) de connexion sans fil WPS pour corréler le routeur sans fil correspondant selon le BSSID, activer le processus WPS du routeur sans fil et accéder au réseau fourni par le routeur sans fil par l'intermédiaire du code PIN sans l'intervention d'un utilisateur.

5. Dispositif d'authentification pour un routeur sans fil selon la revendication 4, comprenant en outre :
- un module de détection de fonction WiFi pour détecter si la fonction WiFi est activée.

6. Dispositif d'authentification pour un routeur sans fil selon l'une quelconque des revendications 4 à 5, dans lequel celui-ci comprend en outre : une unité de stockage pour stocker les codes BSSID et PIN résolus.
